# EUROPEAN PATENT APPLICATION

(11) **EP 1 921 798 A1**
(43) Date of publication of application: **14.05.2008**
(21) Application number: 06741924.2
(22) Date of filing: 19.05.2006
(51) Int. Cl.: H04L 12/26

(54) **A METHOD FOR TESTING THE SERVICE PERFORMANCE OF THE FILE TRANSFER PROTOCOL**

(30) Priority: 31.08.2005 CN 200510036978
(71) Applicant: Huawei Technologies Co., Ltd., Longgang District Shenzhen Guangdong 518129 (CN)
(72) Inventor: CHEN, Hongfei, Guangdong 518219 (CN); ZHANG, Jian, Guangdong 518219 (CN)
(74) Representative: Pfenning, Meinig & Partner GbR
(86) International application number: PCT/CN2006/001036
(87) International publication number: WO 2007/025425

(57) **Abstract**

A method for testing the service performance of the file transfer protocol, it is applied to the IPv6 network, the network includes a client and a server, and the method includes: the client transmits a test connection request to the server to establish the connection controlled of the file transfer protocol; after receiving the test connection request, the server establishes the connection controlled of the file transfer protocol; it establishes the connection between the client and the server, and transfers the test file, and performs the performance test of the file transfer protocol. It can transfer the detecting message for the file transfer protocol in the application layer between the each node in the file transfer protocol network, thereby it can realize the detecting and the monitoring in the file transfer protocol, the detecting method of the invention can know the service performance condition of the file transfer protocol of the network instantly, once the abnormity occurs, it can be discovered instantly, and solved by the user, so that provides the reliable guarantee.

## Description

### Field of the Invention

The present invention relates to the communication field and in particular to a method for measuring service performance of the file transfer protocol at the application layer in an IPv6 network.

### Background of the Invention

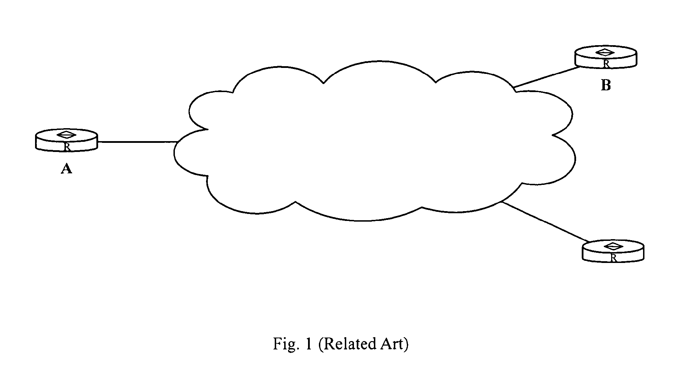

An IPv6 network is a new generation internet. Currently in the industry, deployment and experiments of the IPv6 network are being developed gradually and various relevant services over the IPv6 network are also being improved gradually. In view of design, the IPv6 network is larger in scale and more complex than an IPv4 network. For bearing various services over the IPv6 network, it is necessary to evaluate both the quality of the network and the qualities of the services over the network, so as to timely measure whether the quality of any network service is being degraded, which can be implemented by measuring the network performance. Existing network performance measurement is typically implemented through the Ping technology and the Trace Route technology. Particularly, the Ping technology is a technology adapted to measure whether a communication channel or device operates normally as well as the network performance. Reference is made to Figure 1, which is a principle diagram illustrating that network performance measurement is implemented through Ping. Here, network performance measurement is performed through execution of a Ping command between a network node A and a network node B. Firstly, the network node A creates and sends an ICMPv6 message to the network node B. A router between the network node A and the network node B forwards the ICMPv6 message only. The network node B creates and sends a response message to the network node A upon reception of the ICMPv6 message. After receiving the response message, the network node A can determine that a channel from the network node A to the network node B is normal and can calculate time delay between these two nodes to determine the network performance. In a practical application, the Ping technology is primarily used to judge a connection or disconnection over the network.

Further, the Trace Route technology is also a technology adapted to measure a link. Differently, the implementation principle of the Trace Route technology lies in that a network node which initiates tracing sends a message to a traced network node, and that a network node at each hop, which receives the message by incrementing (from 1) Hop Limit in the message, returns an ICMPv6 time-out message to the network node which initiates tracing. For example, if the address of the network node B is traced and routed from the network node A, an ICMPv6 message is returned from each of routers between the network node A and the network node B as well as the network node B to the network node A. After receiving the ICMPv6 messages, the network node A can determine status and time delay of the link. In a practical application, the Trace Route technology is primarily used to locate a point of failure.

However, the Ping technology and the Trace Route technology described above have the following drawback.

The Ping technology and the Trace Route technology can only measure accessibility and performance at the IP layer in the network, and can not measure status of the file transfer protocol which is a protocol at the application layer in the network, such as accessibility and performance of the file transfer protocol.

### Summary of the Invention

A method is provided for measuring service performance of the file transfer protocol, which can measure and monitor the service performance of the file transfer protocol in an IPv6 network.

In view of above, a method is provided for measuring service performance of the file transfer protocol, the method being applicable in an IPv6 network including a client and a server, and the method including:
(a) sending, by the client, to the server a measurement request for control connection of the file transfer protocol; and establishing, by the server, the control connection of the file transfer protocol upon reception of the measurement request from the client; and
(b) establishing data connection and transferring a measurement file between the client and the server to measure service performance indexes and service availability parameters of the file transfer protocol.

The server initiates service of the file transfer protocol, configures a measurement user account of the file transfer protocol, and sets a path authorized for the measurement account. The client configures a service measurement task of file transfer protocol and sends to the server the request for establishing the control connection of the file transfer protocol in accordance with the configuration.

The measurement task includes setting a start/end time of a measurement, a period and a frequency of the measurement, a measurement account of the file transfer protocol, an operation type of the file transfer protocol, a measurement file for measurement operation of the file transfer protocol, and a network address of a measured server of the file transfer protocol.

After receiving the connection measurement request from the client, the server establishes the control connection of the file transfer protocol and instructs the client to provide an account for authentication. The client provides the server with the configured account for authentication, and the server establishes the control connection of the file transfer protocol upon passing authentication.

In the step (b), the data connection is established as prescribed in RFC2428 by using EPRT or EPSV.

After the measurement is completed, the client sends to the server a request for terminating the control connection of the file transfer protocol. The server acknowledges the termination request and terminates the control connection.

The client records, analyzes and stores measurement data after the control connection is terminated.

The client records a result and awaits the next measurement if the client receives no response from the server within a prescribed period of time or receives a response with an error or a connection denial from the server within a prescribed period of time.

Measurement between the client and the server is conducted in a way of point-to-point, point-to-multipoint, multipoint-to-point, or multipoint-to-multipoint.

The client or the server is a router or a layer-2/layer-3 switch.

The service performance indexes of the file transfer protocol include Packet Throughput of the file transfer protocol, Service Response Delay of the file transfer protocol, Service Authentication Delay of the file transfer protocol, Data Transfer Delay of the file transfer protocol, Control Service Delay of the file transfer protocol, and Data Service Delay of the file transfer protocol.

The service availability parameters of the file transfer protocol include Control Connection Establishment Success Ratio of the file transfer protocol, Data Connection Establishment Success Ratio of the file transfer protocol, Service Success Ratio of the file transfer protocol, and Service Availability of the file transfer protocol.

The present invention has the following advantageous effects over the prior art.

With the method for measuring service performance of the file transfer protocol according to embodiments of the present invention, messages for measuring the service performance of the file transfer protocol at the application layer are transferred between respective nodes in the IPv6 network, thus measuring and monitoring the service performance of the file transfer protocol in the IPv6 network. With the method according to embodiments of the present invention, the service performance of the file transfer protocol in the IPv6 network can be known in time. Further, once an abnormality occurs, it can be discovered in time and be solved by the user, thus providing reliable guarantee for normal operation of the network.

### Brief Description of the Drawings

Figure 1 illustrates a model of an existing IPv6 network;

Figure 2 is a flow chart illustrating a method for measuring service performance of the file transfer protocol according to embodiments of the present invention;

Figure 3 is a timing diagram illustrating a method for measuring service performance of the file transfer protocol according to embodiments of the present invention; and

Figure 4A to Figure 4D are schematic diagrams illustrating a path along which a measurement message is transferred with a method for measuring service performance of the file transfer protocol according to embodiments of the present invention.

### Detailed Description of the Invention

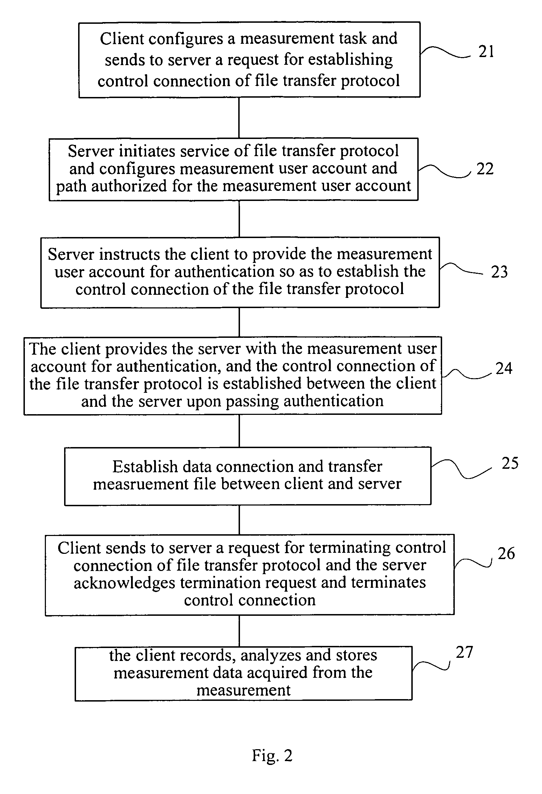

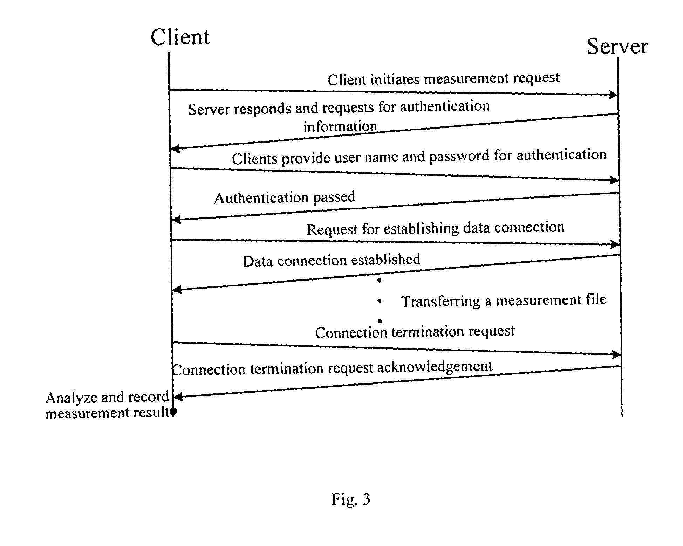

Reference is made to Figure 2 and Figure 3; Figure 2 is a flow chart illustrating a method for measuring service performance of the file transfer protocol according to embodiments of the present invention and Figure 3 is a timing diagram illustrating a method for measuring service performance of the file transfer protocol according to embodiments of the present invention. The method for measuring the service performance of the file transfer protocol according to embodiments of the present invention is applicable in an IPv6 network, which includes a client and a server. Here, the client is responsible for initiating a measurement and analyzing and storing a measurement result, and the server is responsible for responding to a measurement request from the client and sending a response message to the client. A service performance measurement of the file transfer protocol according to embodiments of the present invention is conducted between the client and the server responding to measurement.

During a service performance measurement of the file transfer protocol in an IPv6 network, the server initiates file transfer service, configures a measurement user account of the file transfer protocol, and sets a path authorized for the measurement user account. The measurement user account includes a user name and a password. The client configures a service performance measurement task of the file transfer protocol through setting a start/end time of a measurement, a period and a frequency of the measurement, the measurement user account of the file transfer protocol, an operation type of the file transfer protocol, a measurement file for measurement operation of the file transfer protocol, and a network address of the server of the file transfer protocol. The client sends to the server a request for establishing control connection of the file transfer protocol in accordance with the configuration described above (step 21). After receiving the request from the client, the server establishes control connection of the FTP and requests the client to provide the user name and password for authentication (step 22). After receiving the request from the client, the server instructs the client to provide the measurement user account for authentication so as to establish the control connection of the file transfer protocol (step 23). The client provides the server with the measurement user account for authentication, and the control connection of the file transfer protocol is established between the client and the server upon passing authentication (step 24). Thereafter, data connection is established between the client and the server, and then a measurement file is transferred so as to measure service performance indexes and service availability parameters of the file transfer protocol, and the corresponding time and the number of the packets lost are recorded. Here, the data connection is established as prescribed in RFC2428 by using EPRT or EPSV (step 25). After the measurement is completed, the client sends to the server a request for terminating the control connection of the file transfer protocol, and the server acknowledges the termination request and terminates the control connection (step 26). Finally, the client records, analyzes and stores measurement data acquired from the measurement after the control connection is terminated (step 27). Otherwise, the client records a result corresponding to the measurement and awaits the next measurement if the client receives no response from the server within a prescribed period of time or receives a response with an error or a connection denial from the server within a prescribed period of time.

With the method for measuring the service performance of the file transfer protocol according to embodiments of the present invention, the client-server architecture is utilized to monitor network conditions of the file transfer protocol. The client or the server may be but not be limited to a router or a layer-2/layer-3 switch.

Particularly, a client for measuring FTP service accomplishes functions of a client in the FTP protocol and is primarily responsible for initiating a measurement and analyzing and storing a measurement result. The functions include: storing user configuration, such as a start/end time of a measurement, a frequency of the measurement, a period of the measurement, an account for the measurement (including a user name, a password, etc.), an operation type of the FTP measurement such as PUT/GET, a measurement file for an FTP measurement operation, an IP address of a server of the FTP, etc.; setting a timed measurement in accordance with the user-configured start/end time of the measurement and frequency and period of the measurement; when the time for the measurement arrives, sending to the server of the FTP a request for establishing control connection of the file transfer protocol between the client and the server in accordance with the user configuration; recording a result if a response with an error or a connection denial from the server is received within a prescribed period of time or no response from the server is obtained within a prescribed period of time, and then going to step 10 awaiting the next measurement; providing the server of the FTP sequentially with the user name and the password of the account for the measurement for authentication after a proper response from the server is received within a prescribed period of time; the client requesting the server for establishing a data connection between the client and the server upon passing authentication. In the IPv6 network, a data connection of an FTP service shall be established by using EPRT (corresponding to a PORT command in RFC959) or EPSV (corresponding to a PASV command in RFC959) as prescribed in RFC2428 (FTP Extensions for IPv6 and NATs). Noted that the EPSV command is recommended for smooth traversing of any NAT or Firewall possibly present in the network. After the data connection is established, a measurement file is upload (PUT) to or is downloaded (GET) from the FTP server in accordance with the user configuration. After the measurement file is transferred, the client sends an FTP connection disconnection request to the server, terminates the present measurement upon reception of a termination response from the server, analyzes and records a measurement result so that the user can view it through a command line or a network administrator, and starts timed measurement of the next measurement.

The server of the FTP service measurement accomplishes functions of a server in the FTP protocol and is primarily responsible for responding to a measurement request from the client and sending a response message to the client. The functions primarily include: storing measurement configuration, such as a measurement user account for an FTP measurement (including a user name and a password), a path authorized for the measurement user account, etc.; initiating service of the FTP protocol in accordance with the measurement configuration; monitoring a measurement request message for establishing control connection of the File transfer protocol sent from the client; sending a response message to the client and requesting the client for providing the user name and password for authentication upon reception of an FTP measurement request message sent from the client; awaiting initiating a data connection establishment by the client after passing authentication; downloading or uploading a measurement data file together with the client after the data connection is established; disabling the connection and finishing the measurement upon reception of a connection disabling request from the client after the measurement file is transferred; and proceeding with monitoring the next measurement request from the client.

The service performance indexes of the file transfer protocol include: an FTP Packet Throughput, an FTP Service Response Delay, an FTP Service Authentication Delay, an FTP Data Transfer Delay, an FTP Control Service Delay, an FTP Data Service Delay, etc. The service availability parameters of the file transfer protocol include: an FTP Control Connection Establishment Success Ratio, an FTP Data Connection Establishment Success Ratio, an FTP Service Success Ratio, an FTP Service Availability, etc.

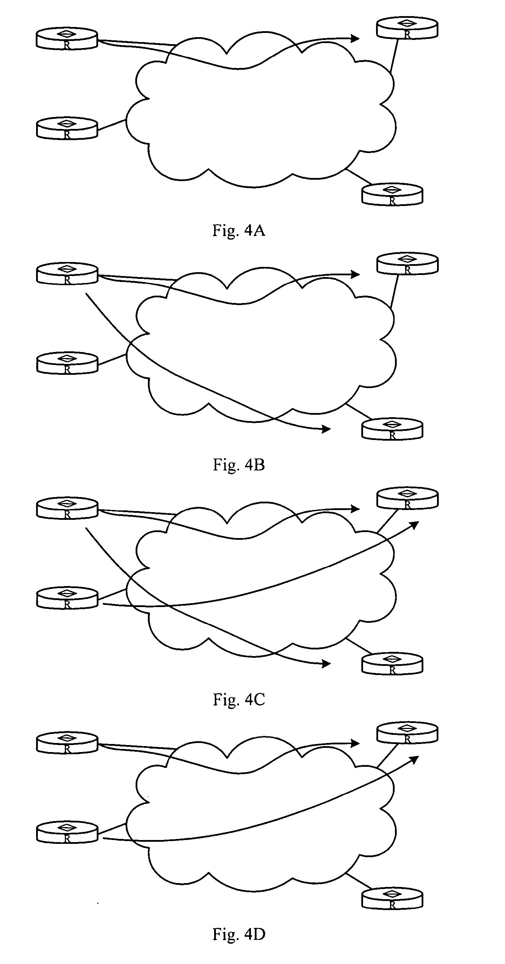

It can be understood that measurement between the node which initiates measurement of the protocol at the application layer and the node which responds to the measurement can be conducted in a way of point-to-point, point-to-multipoint, multipoint-to-multipoint or multipoint-to-point, respectively as illustrated in Figure 4A to Figure 4D where a line with an arrow indicates a path along which measurement files are transferred. Further, the client or the server may be, but not limited to, a router, or a layer-2/layer-3 switch, etc.

As described above, with the method for measuring service performance of the file transfer protocol in an IPv6 network according to embodiments of the present invention, messages measuring the file transfer protocol at the application layer are transferred between respective nodes in the IPv6 network, thus realizing the measuring and monitoring of the file transfer protocol in the IPv6 network. With the method according to embodiments of the present invention, the service performance of the file transfer protocol in the IPv6 network can be known in time. Further, once an abnormality occurs, it can be discovered in time and be solved by the user, thus providing reliable guarantee for normal operation of the network.

The foregoing descriptions are merely of illustrative of the preferred embodiments of the present invention, and it shall be noted that numerous modifications and variations can be made by those ordinarily skilled in the art without departing from the principle of the present invention, and these modifications and variations shall fall within the scope of the claims appended to the present invention.

## Claims

1. A method for measuring service performance of the file transfer protocol, the method being applicable in an IPv6 network comprising a client and a server, and the method comprising:
(a) sending, by the client, to the server a measurement request for establishing control connection of the file transfer protocol; and establishing, by the server, the control connection of the file transfer protocol upon reception of the measurement request from the client; and
(b) establishing data connection and transferring a measurement file between the client and the server to measure service performance indexes and service availability parameters of the file transfer protocol.

2. The method for measuring service performance of the file transfer protocol according to claim 1, further comprising: initiating, by the server, service of the file transfer protocol, configuring a measurement user account of the file transfer protocol, and setting a path authorized for the measurement user account; and configuring, by the client, a service performance measurement task of file transfer protocol, wherein the sending to the server the measurement request for establishing the control connection of the file transfer protocol is in accordance with the configuration.

3. The method for measuring service performance of the file transfer protocol according to claim 2, wherein the service performance measurement task comprises setting a start/end time of a measurement, a period and a frequency of the measurement, the measurement user account of the file transfer protocol, an operation type of the file transfer protocol, a measurement file for measurement operation of the file transfer protocol, and a network address of the server of the file transfer protocol.

4. The method for measuring service performance of the file transfer protocol according to claim 2, further comprising: after receiving, by the server, the measurement request from the client, and before establishing the control connection of the file transfer protocol, instructing, by the server, the client to provide the measure user account for authentication; providing, by the client, the server with the measure user account configured for authentication, wherein the establishing, by the server, the control connection of the file transfer protocol is after passing authentication.

5. The method for measuring service performance of the file transfer protocol according to claim 1, wherein in the step (b), the data connection is established as prescribed in RFC2428 by using EPRT or EPSV.

6. The method for measuring service performance of the file transfer protocol according to claim 1, further comprising; after the measurement is completed, sending, by the client, to the server a request for terminating the control connection of the file transfer protocol; and acknowledging, by the server, the termination request, and terminating the control connection.

7. The method for measuring service performance of the file transfer protocol according to claim 6, further comprising recording, analyzing and storing, by the client, measurement data acquired from the measurement after the control connection is terminated.

8. The method for measuring service performance of the file transfer protocol according to claim 7, further comprising: recording, by the client, a result corresponding to the measurement, and awaiting the next measurement, if the client receives no response from the server within a prescribed period of time or receives a response with an error or a connection denial from the server within a prescribed period of time.

9. The method for measuring service performance of the file transfer protocol according to claim 1, wherein measurement between the client and the server is conducted in a way of point-to-point, point-to-multipoint, multipoint-to-point, or multipoint-to- multipoint.

10. The method for measuring service performance of the file transfer protocol according to claim 1, wherein the client or the server is a router or a layer-2/layer-3 switch.

11. The method for measuring service performance of the file transfer protocol according to claim 1, wherein the service performance indexes of the file transfer protocol comprise Packet Throughput of the file transfer protocol, Service Response Delay of the file transfer protocol, Service Authentication Delay of the file transfer protocol, Data Transfer Delay of the file transfer protocol, Control Service Delay of the file transfer protocol, and Data Service Delay of the file transfer protocol.

12. The method for measuring service performance of the file transfer protocol according to claim 1, wherein the service availability parameters of the file transfer protocol comprise Control Connection Establishment Success Ratio of the file transfer protocol, Data Connection Establishment Success Ratio of the file transfer protocol, Service Success Ratio of the file transfer protocol, and Service Availability of the file transfer protocol.
